# EUROPEAN PATENT APPLICATION

(11) **EP 4 541 862 A1**
(43) Date of publication of application: **23.04.2025**
(21) Application number: 23306807.1
(22) Date of filing: 16.10.2023
(51) Int. Cl.: C09B 57/02, C09B 57/10

(54) **BICHROMOPHORIC COMPOUNDS AND THEIR USES, NOTABLY IN THE STUDY OF METALLO-BIOMEDICAL AGENTS**

(71) Applicant: Centre National de la Recherche Scientifique, 75016 Paris (FR); Université de Lorraine, 54000 Nancy (FR)
(72) Inventor: Bouché, Mathilde, 54110 ROSIERES-AUX-SALINES (FR); Gros, Philippe, 54210 TONNOY (FR)
(74) Representative: Gevers & Orès

(57) **Abstract**

The present invention concerns bichromophoric compounds and methods of preparation thereof. Said invention also concerns the uses of these compounds, notably in the study of metallo-biomedical agents, notably metallo-pharmaceuticals or metallo-contrast agents, in particular for the study of the biotransformations of metallo-biomedical agents, notably metallo-pharmaceuticals or metallo-contrast agents, more particularly to localize and/or quantify *in vitro* or *in vivo* the biotransformations of metallo-biomedical agents, notably metallo-pharmaceuticals or metallo-contrast agents.

## Description

The present invention concerns bichromophoric compounds and methods of preparation thereof. Said invention also concerns the uses of these compounds, notably in the study of metallo-biomedical agents, notably metallo-pharmaceuticals or metallo-contrast agents, in particular for the study of the biotransformations of metallo-biomedical agents, notably metallo-pharmaceuticals or metallo-contrast agents, more particularly to localize and/or quantify *in vitro* or *in vivo* the biotransformations of metallo-biomedical agents, notably metallo-pharmaceuticals or metallo-contrast agents.

Biomedical agents biotransformation reactions are essential chemical processes, mainly mediated by enzymes, small redox active molecules (such as glutathione) or variation of physiological parameters (such as pH, oxygenation, or ionic strength), which lead to the formation of drug metabolites that are excreted from the body. This metabolism is known as a detoxication mechanism. However, these reactions which govern the pharmacological efficacy of the drugs, may in many cases, also be responsible for toxic unwanted effects. Due to the large variety of chemical structures, biomedical agents biotransformation involves numerous and sophisticated reaction mechanisms and metabolic pathways.

Knowing the biotransformations of a biomedical agent is therefore a necessary step in its design. Indeed, insufficient knowledge of these biotransformations slows down the biomedical agents development process and sometimes even leads to biomedical agents being withdrawn from the market.

In particular, metallo-biomedical agents, i.e. biomedical agents containing a metal (e.g. cisplatin), although having excellent potential for treating diseases with a poor prognosis, possess dative bonds that are reputed to be less stable than covalent bonds, and are likely to undergo biotransformations. For example, such a biotransformation occurs when cisplatin enters the cell and undergoes aquation involving loss of one or both chloride ligands. The newly formed complex can then interact with DNA.

Biotransformations of biomedical agents, which are a dynamic process, are generally studied using *ex situ* methods (fluid sampling and analysis by chromatography and spectroscopy).

However, a number of reviews have highlighted the urgent need to develop a different approach.

In the case of metallo-biomedical agents, several groups have suggested studying these transformations by measuring variations in fluorescence of a coordinated fluorescent probe, but the proposed methods do not provide information on the quantification of these biotransformations, and their detection limit is relatively high.

Accordingly, it is an object of the present invention to provide new compounds that enable the quantification of the biotransformations undergone by metallo-biomedical agents with a low detection limit and in real time.

Another object of this invention is to provide new tools that make it possible to localize and/or quantify metallo-biomedical agents biotransformations *in vitro* or *in vivo,* and also to study the dynamics of such biotransformations.

Better understanding of the biotransformations undergone by metallo-biomedical agents is thus achievable thanks to the present invention. It enables an earlier go/no go decision-making and a quicker and more rational drug design to prevent deleterious biotransformations.

Thus, the present invention relates to a compound of the following formula (I):

D₁-E₁-(MBA)-E₂-D₂ (I),

wherein :
MBA is a metallo-biomedical agent, notably a metallo-pharmaceutical or a metallo-contrast agent, in which the metal is a metal M chosen from Co, Fe, Ni, Cu, Pt, Pd, Ru, Ir, Cr, and Mn;
said metallo-biomedical agent MBA comprising at least one coordination moiety Z₁ constituted by or comprising at least one A₁ coordinating atom, Z₁ being chosen from:
   - -O⁻, -OH, or -ORₐ,
   - -S⁻, -SH, or -SRₐ,
   - -S(O)Rₐ, -S(O)₂Rₐ, or -SO₃,
   - -Se⁻, -SeH, or -SeRₐ,
   - -COO⁻, -COOH, or -COORₐ,
   - -PRₐR_{b} or -P(O)RₐR_{b},
   - -NH₂, -NHRₐ or -NRₐR_{b},
   - carbens, in particular N-heterocyclic carbens,
   - heteroaryls, in particular azaheteroaryls, more particularly aromatic amine groups, for example pyridinyl or quinoleinyl, and
   - aryls, in particular phenyl, and heteroaryls, in particular azaheteroaryls, more particularly aromatic amine groups, for example pyridinyl or quinoleinyl, being substituted by at least one group R chosen independently from:
      ∘ -O⁻, -OH, or -ORₐ,
      ∘ -S⁻, -SH, or -SRₐ,
      ∘ -S(O)Rₐ, -S(O)₂Rₐ, or -SO₃,
      ∘ -Se⁻, -SeH, or -SeRₐ,
      ∘ -COO⁻, -COOH, or -COORₐ,
      ∘ -PRₐR_{b} or -P(O)RₐR_{b},
      ∘ -NH₂, -NHRₐ or -NRₐR_{b},
Rₐ, R_{b} being independtly chosen from and C₁-C₆-alkyl groups, aryls, in particular phenyl, and heteroaryls, in particular azaheteroaryls, more particularly aromatic amine groups, for example pyridinyl or quinoleinyl;
E₁ being bound to MBA by being covalently bound to Z₁,
E₂ being bound through the atom or group X when it exists or through Eₐ otherwise to MBA by being covalently bound to MBA;
D₁ and D₂ are organic fluorophores, D₁ being different from D₂;
E₁ is a linker of following formula (IIa):

   -(A)ₓ-(B)_{y}-(C)_{z}- (IIa),

   in which :
   x, y and z are independtly 0 or 1, with x + y + z > 0,
   A, B and C are independtly chosen from -C(R')=C(R")-, -C=C-, arene diyl groups, in particular benzene diyl, and heteroarene diyl groups, in particular triazole diyl or tetrazine diyl, with R' and R" being independently chosen from H and C₁-C₃-alkyl groups;
or E₁ is absent;
E₂ is a linker of following formula (IIb):

   -(X)ᵢ-Eₐ-(Y)ⱼ-(E_{b})ₖ- (IIb),

   in which :
   i, j and k are independtly 0 or 1,
   X is O or NR_{c}, with R_{c} being chosen from Hand C₁-C₃-alkyl groups,
   Eₐ and E_{b} are independently chosen from C₁-C₁₂-alkane diyl groups, said groups being optionnaly interupted by one or more -O- and/or -NH- residues;
   Y is chosen from O or NR_{c}, with R_{c} being chosen from Hand C₁-C₃-alkyl groups, - NHCO-, -CONH-, -C(=O)-, -COO-, OC(=O), -C(R')=C(R")-, with R' and R" being independently chosen from H and C₁-C₃-alkyl groups, -C=C-, maleimide diyl, arene diyl groups, in particular benzene diyl, and heteroarene diyl groups, in particular aza-heteroarene diyl groups, more particularly triazole diyl or tetrazine diyl.

Hence, the coordination moiety Z₁ can be the coordinating atom A₁ or a residue comprising said coordinating atom A₁. As defiend above, A₁ can be a O, S, Se, C, N or P atom. And said Z₁ can be a O, S, Se, C, N or P atom or a carbene comprising said atom, an heteroaryl comprising said atom, or an aryl or heteroaryl bearing said atom.

And the MBA corresponds in particular to the complex comprising the metal M, and the coordination moiety or moieties, and optionnaly halogens, water molecules, and/or solvent molecules completing the coordination sphere of the metal M.

By « metallo-biomedical agent », is notably meant a metallo-pharmaceutical or a metallo-contrast agent.

By « metallo-pharmaceutical », is notably meant a metallo-drug, in particular an approved metallo-drug or a metallo-drug candidate.

By « metallo-biomedical agent », « metallo-pharmaceutical », « metallo-drug », « metallo-drug candidate » and « metallo-contrast agent », are in particular meant, respectively a biomedical agent, pharmaceutical, drug, drug and contrast agent, which contains a metal, for example as an active ingredient.

By « coordination moiety Z₁» is in particular meant a coordinating atom A₁ or a group of the metallo-biomedical agent comprising at least one A₁ coordinating atom, which is bound to the metal M through at least one dative bond (also known as coordinate bond).

When the metallo-biomedical agent, in particular metallo-pharmaceutical or metallo-contrast agent MBA comprises more than one coordination moiety, the coordination moieties may or may not be bound together or to some of them, in particular through single bonds, double bonds, triple bonds, arene diyl, in particular benzene diyl, and heteroarene diyl groups, in particular triazole diyl or tetrazine diyl.

In particular, the at least one coordination moiety is bound to others, in particular one or two, coordination moieties, notably through single bonds, double bonds, triple bonds, arene diyl, in particular benzene diyl, and heteroarene diyl groups, in particular triazole diyl or tetrazine diyl.

E₂ may be bound to MBA through Z₁ or through another of the coordination moiety when they are present.

In particular, E₂ is bound to MBA through acoordination moiety that is not Z₁.

By "organic fluorophores" is in particular meant that D₁ and D₂ are intrinsic organic fluorophores, or are fluorescent when bound to E₁ and E₂ respectivelly.

In a prefered embodiment, D₁ and D₂ display distinct excitation and/or emission wavelengths, in particular excitation and emission wavelengths.

Arene diyl groups and heteroarene diyl groups are in particular para-arene diyl groups and heteroarene diyl groups, respectively.

The coordination sphere of the metal M may be completed by halogens, ligands (as well known from the skilled in the art), in particular small ligands (as well known from the skilled in the art), for example CO, CN⁻, NO, water molecules, and/or solvent molecules.

In a particular embodiment, MBA comprises, further to Z₁, n additional coordination moieties Z', with n being chosen from 1, 2, 3, 4 or 5.

In a particular embodiment, the additional coordination moieties Z' constituted by or comprising at least one A' coordinating atom, Z' being chosen from:
- -O⁻, -OH, or -ORₐ,
- -S⁻, -SH, or -SRₐ,
- -S(O)Rₐ, -S(O)₂Rₐ, or -SO₃,
- -Se⁻, -SeH, or -SeRₐ,
- -COO⁻, -COOH, or -COORₐ,
- -PRₐR_{b} or -P(O)RₐR_{b},
- -NH₂, -NHRₐ or -NRₐR_{b},
- carbens, in particular N-heterocyclic carbens,
- heteroaryls, in particular azaheteroaryls, more particularly aromatic amine groups, for example pyridinyl or quinoleinyl, and
- aryls, in particular phenyl, and heteroaryls, in particular azaheteroaryls, more particularly aromatic amine groups, for example pyridinyl or quinoleinyl, being substituted by at least one group R chosen independently from:
   ∘ -O⁻, -OH, or -ORₐ,
   ∘ -S⁻, -SH, or -SRₐ,
   ∘ -S(O)Rₐ, -S(O)₂Rₐ, or -SO₃,
   ∘ -Se⁻, -SeH, or -SeRₐ,
   ∘ -COO⁻, -COOH, or -COORₐ,
   ∘ -PRₐR_{b} or -P(O)RₐR_{b},
   ∘ -NH₂, -NHRₐ or -NRₐR_{b},
Rₐ, R_{b} being independtly chosen from and C₁-C₆-alkyl groups, aryls, in particular phenyl, and heteroaryls, in particular azaheteroaryls, more particularly aromatic amine groups, for example pyridinyl or quinoleinyl.

In a particular embodiment, Z₁ is chosen from:
- pyridinyl groups, and
- W-aryl groups, in particular W-phenyl group, wherein W is OH, SH, NH₂ or PR_{d}, with R_{d} being phenyl.

In a particular embodiment, Z₁ is chosen from:
- Polypyridines, for exmple terpyridine or bis-terpyridine, and their derivatives;
- bis(carbene)pyridine, bis-bis(carbene)pyridine and their derivatives; and
- bis(phosphine)pyridine and their derivatives.

In a particular embodiment, D₁ and D₂ are independently chosen from coumarine, carbazole, thieno[3,2-b]thiophene, triphenylamine, F₃C-benzene, trifluoromethyl-benzene, anthracene, benzo[de]isoquinoline-1,3(1H,3H)-dione, BODIPY, rhodamines, cyanine3 amine, cyanine5 amine, cyanine7 amine compounds, and their derivatives.

By "derivatives" is in particular meant that said compounds are substitued by at least a R‴ group chosen from C₁-C₃ alkyl groups, aryls, in particular phenyl, heteroaryls, -OH, ORₐ, -NH₂, -NHRₐ, -NRₐR_{b}, Rₐ and R_{b} being as defined above.

In a particular embodiment, M is Co, Fe, Ni, Cu, Pt, or Pd, in particular Fe.

In a particular embodiment, E₁ is a benzene diyl, in particular para-benzene diyl, or a thiophene diyl, in particular a 2,5- thiophene diyl.

In a particular embodiment, E₂ is such as:

-(X)ᵢ-Eₐ-(Y)ⱼ-(E_{b})ₖ- (IIb),

• i, j and k are 1,
• X is O,
• Eₐ is a C₁-C₁₂-alkane diyl group, in particular a C₁-C₃-alkane diyl group,
• E_{b} is a C₁-C₁₂-alkane diyl group, in particular a C₂-C₁₂-alkane diyl group, and/or
• Y is an arene diyl, in particular benzene diyl, or an heteroarene diyl, in particular a triazole diyl group.

In another aspect, the present invention concerns the use of a compound of formula (I) as defined above, for the in vitro, ex situ or ex vivo study of the metallo-biomedical agent MBA, notably a metallo-pharmaceutical or a metallo-contrast agent.

In another aspect, the present invention concerns a method of in vitro, ex situ or ex vivo study of a metallo-biomedical agent MBA, notably a metallo-pharmaceutical or a metallo-contrast agent, comprising a step of fluorescence measurement related to a compound of formula (I) as defined above.

This fluorescence measurement may be performed by techniques that are well known from the skilled person in the art.

For example, the fluorescence spectra are recorded on a SAFAS-Xenius spectrometer (Monaco) and corrected for instrument response. Solutions of the samples are typically prepared freshly in ethanol at a concentration corresponding to an absorbance of 0.1 OD and analyzed at 20°C in a quartz cuvette with an optical pathlength of 10mm.

As described in example 2, and in a typical experiment, D₁ is quenched (generally more than 95% quenched) while D₂ acts as an internal standard, when the MBA is untransformed.

When the MBA undergoes degradation, for example transchelation, fluorescence of D₁ is restored. In another aspect, the present invention concerns a compound of formula (I) as defined above, for its use in the in vivo study of the metallo-biomedical agent MBA, notably a metallo-pharmaceutical or a metallo-contrast agent.

### DEFINITIONS

The following terms and expressions contained herein are defined as follows:
As used herein, a range of values in the form "x-y" or "x to y", or "x through y", include integers x, y, and the integers therebetween. For example, the phrases "1-6", or "1 to 6" or "1 through 6" are intended to include the integers 1, 2, 3, 4, 5, and 6. Preferred embodiments include each individual integer in the range, as well as any subcombination of integers. For example, preferred integers for "1-6" can include 1, 2, 3, 4, 5, 6, 1-2, 1-3, 1-4, 1-5, 2-3, 2-4, 2-5, 2-6, etc.

As used herein, the term "alkyl" refers to a straight-chain, or branched alkyl group having 1 to 6 carbon atoms, such as methyl, ethyl, propyl, isopropyl, butyl, isobutyl, sec-butyl, tert-butyl, pentyl, isoamyl, neopentyl, 1-ethylpropyl, 3-methylpentyl, 2,2-dimethylbutyl, 2,3-dimethylbutyl, hexyl, etc. The alkyl moiety of alkyl-containing groups, such as aralkyl or O-alkyl groups, has the same meaning as alkyl defined above. Lower alkyl groups, which are preferred, are alkyl groups as defined above which contain 1 to 4 carbons. A designation such as "C₁-C₄ alkyl" refers to an alkyl radical containing from 1 to 4 carbon atoms. The term "alkyl" can also refer to a cycloalkyl, as defined below.

As used herein, the term "cycloalkyl" refers to a saturated or partially saturated mono- or bicyclic alkyl ring system containing 3 to 7 carbon atoms. A designation such as "C₅-C₆ cycloalkyl" refers to a cycloalkyl radical containing from 5 to 6 ring carbon atoms. Examples of cycloalkyl groups include such groups as cyclopropyl, cyclobutyl, cyclopentyl, cyclohexyl, cycloheptyl, cyclooctyl, pinenyl, and adamantanyl. The cycloalkyl moiety of cycloalkyl-containing groups, such as O-cycloalkyl groups, has the same meaning as alkyl defined above.

As used herein, the term "aryl" refers to a substituted or unsubstituted, mono- or bicyclic hydrocarbon aromatic ring system having 6 to 10 ring carbon atoms. Examples include phenyl and naphthyl. Preferred aryl groups include unsubstituted or substituted phenyl and naphthyl groups. Included within the definition of "aryl" are fused ring systems, including, for example, ring systems in which an aromatic ring is fused to a cycloalkyl ring. Examples of such fused ring systems include, for example, indane, indene, and tetrahydronaphthalene.

As used herein, the term "heteroaryl" refers to an aromatic group containing 5 to 10 ring carbon atoms in which one or more ring carbon atoms are replaced by at least one hetero atom such as -O-, -N-, or -S-. Examples of heteroaryl groups include pyrrolyl, furanyl, thienyl, pirazolyl, imidazolyl, thiazolyl, isothiazolyl, isoxazolyl, oxazolyl, oxathiolyl, oxadiazolyl, triazolyl, oxatriazolyl, furazanyl, tetrazolyl, pyridyl, pyrazinyl, pyrimidinyl, pyridazinyl, triazinyl, indolyl, isoindolyl, indazolyl, benzofuranyl, isobenzofuranyl, purinyl, quinazolinyl, quinolyl, isoquinolyl, benzoimidazolyl, benzothiazolyl, benzothiophenyl, thianaphthenyl, benzoxazolyl, benzisoxazolyl, cinnolinyl, phthalazinyl, naphthyridinyl, and quinoxalinyl. Included within the definition of "heteroaryl" are fused ring systems, including, for example, ring systems in which an aromatic ring is fused to a heterocycloalkyl ring. Examples of such fused ring systems include, for example, phthalamide, phthalic anhydride, indoline, isoindoline, tetrahydroisoquinoline, chroman, isochroman, chromene, and isochromene.

### FIGURES

Figure 1 represents the 2D fluorescence spectrum of compound Fe1-2 of example 1, according to the experiments of example 2.
Figure 2 represents the quenching of D₁, while D₂ acts as an internal standard, when the compound Fe1-2 of example 1 is intact.
Figure 3 illustrates one of the possible degradations of a metallo-biomedical agent (MBA).
Figure 4 shows that the fluorescence of D₁ is restored when a degradation of the MBA occurs.

### EXAMPLES

### Example 1: Synthesis of the compounds of the invention

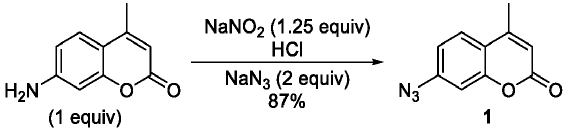

**Synthesis of 7-azido-4-methylcoumarin:** 7-Amino-4-methylcoumarin (1 equiv, 0.5 g) was dissolved in 3 M HCl (15 mL). The solution was cooled to 0 °C, and an aqueous solution of sodium nitrite (1.25 equiv, 0.25 g) was slowly added. The mixture was stirred for 30 min, followed by the addition of sodium azide (2 equiv, 0.37 g) in deionized water (10). After 3 h of stirring in the dark, the resulting brown solution was extracted with ethyl acetate (3 × 15 mL). The combined organic layers were washed with brine. Removal of the solvents resulted in 500.5 mg (87%) of 7-azido-4-methylcoumarin as a yellow-solid. **1H NMR** (400 MHz, CDCl₃) δ 7.58 - 7.54 (m, 1H), 6.97 - 6.93 (m, 2H), 6.21 (q, J = 1.3 Hz, 1H), 2.41 (d, J = 1.3 Hz, 3H). **HRMS** (ESI-TOF) m/z [M+H]⁺ Calcd for C₁₀H₁₀NO₂ m/z 176.0706; Found: 176.0779.

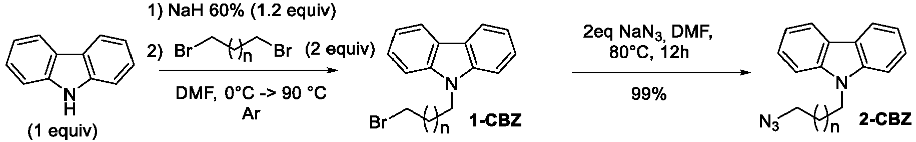

**General protocol for the synthesis of azido-carbazoles:** Carbazole (1 equiv, 0.5 g, 2.98 mmol) was dissolved in dry DMF (about 10 ml) in a roudlflask and cooled to 0°C, then 144 mg of NaH (.2 equiv, 11.96 mmol) was added to the solution. With the evolution of H₂ gas, the colorless solution became turbid. After 45 minutes, 1.2 equivalent of dibromo alcane (5.98 mmol) was added to the mixture of solution and refluxed at 90 °C overnight. The reaction was stopped when by TLC no carbazole was observed and several new intense spots were observed. The mixture was purified by column chromatography by using silica gel cyclohexane as eluent, colorless solid or oil were obtained.

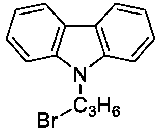

**1H NMR** (400 MHz, CDCl₃) δ 8.15 (d, J = 6.8 Hz, 1H), 7.51 (s, 2H), 7.30 (s, 1H), 4.51 (t, J = 6.5 Hz, 1H), 3.40 (t, J = 6.2 Hz, 1H), 2.45 (p, J = 6.4 Hz, 1H).

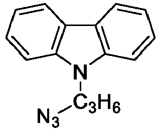

**1H NMR** (400 MHz, CDCl₃) δ 8,14 (d, J = 7.8 Hz, 2H), 7.50 (m, 2H), 7.43 (m, 2H), 7.27 (t, J = 7.5 Hz, 2H), 4.40 (t, J = 6.7 Hz, 2H), 3.29 (t, J = 6.7 Hz, 2H), 2.11 (m, 2H). **HRMS** (ESI-TOF) m/z [M+H]⁺ Calcd for C₁₅H₁₅N₄ m/z 251.1291; Found: 251.1292.

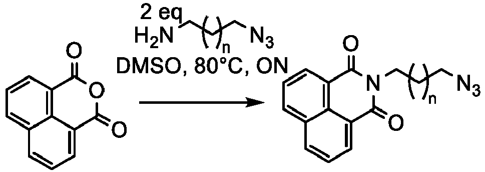

**General protocol for the synthesis of azido-naphtalimides:** 1H,3H-benzo[de]isochromene-1,3-dione (1 equiv, 100 mg, 0.5 mmol) was added to a solution of 3-azidopropan-1-amine (2 equiv, 142 mg, 1 mmol) in 10 mL of DMSO and heated at 80°C overnight. The mixture was further diluted with DI water, extracted with DCM (5x20 mL), washed with brine, MgSO₄, filtered and dried under vacuum to afford the corresponding compound as a yellow oil.

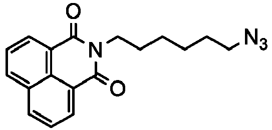

**1H NMR** (400 MHz, CDCl₃) δ 8.51 (d, J = 7.4 Hz, 2H), 8.13 (d, J = 8.4 Hz, 2H), 7.67 (t, J = 7.9 Hz, 2H), 4.13 (m, 2H), 3.23 (t, J = 6.9 Hz, 2H), 1.72 (m, 2H), 1.59 (m, 2H), 1.43 (m, 2H). **HRMS** (ESI-TOF) m/z [M+H]⁺ Calcd for C₁₈H₁₉N₄O₂ m/z 323.1503; Found: 323.1511.

### General protocols for the synthesis of 'always ON' fragments

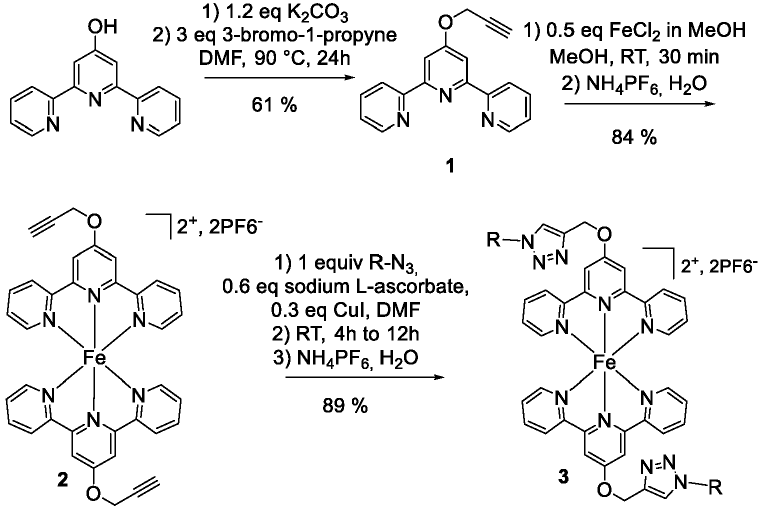

**Synthesis of 1**: In a round bottom flask, both [2,2':6',2"-terpyridin]-4'-ol (1 equiv, 50 mg, 0.2 mml) and K₂CO₃ (1.2 equiv, 33 mg, 0.24 mmol) were added to a solution of 5 mL of degassed DMF. Then, 3-bromo-1-propyne (3 equiv, 89 mg, 0.6 mmol) was added to the mixture and further stirred at 90°C for 24h. The mixture was then diluted by DCM, washed by water and brine prior drying under vacuum. Finally, the desired product was isolated upon recrystallization in hot ethanol as fine off-white needles. **1H NMR** (400 MHz, d6-DMSO) δ 8.77-8.69 (m, 2H), 8.63 (d, J = 7.9 Hz, 2H), 8.04 (s, 2H), 8.01 (td, 2H), 7.51 (ddd, 2H), 5.11 (d, J = 2.4 Hz, 2H), 3.72 (t, J = 2.4 Hz, 1H). **HRMS** (ESI-TOF) m/z [M+H]⁺ Calcd for C₁₈H₁₄N₃O m/z 288.1131; Found: 288.1144.

**Synthesis of 2**: In a Schlenk were added both the ligand (1 equiv) and FeCl₂ precursor (0.5 equiv, 20 mg, 0.16 mmol), then three Argon-vacuum were made and 2 mL of dry methanol were added under vigorous stirring. The reaction mixture turning purple was allowed to proceed at room temperature over 30 min, then filtrated over a pad of celite, concentrated and precipitated by addition of Et₂O. The precipitate was collected by filtration, washed by Et₂O and dried under vacuum to afford the desired complex as a fine purple powder. **1H NMR** (400 MHz, d6-acetone) δ 8.52 (s, 4H), 8.44 (d, J = 7.9 Hz, 4H), 7.87 (m, 4H), 7.14 (d, J = 5.2 Hz, 4H), 7.06 (m, 4H), 5.35 (d, J = 2.4 Hz, 4H).

**General protocol for the synthesis of 3**: In a brown tinted round bottom flask, were added the alkyne complex (1 equiv, 12 mg, 0.013 mmol) with the azide (2.8 equiv, 0.033 mmol), copper iodide (0.3 equiv, 1.54 mg, 0.016 mmol) and sodium L-ascorbate (0.6 equiv, 3.2 mg, 0.016 mmol) in 1 mL of DMF and further reacted for 4h to 12h depending on the azide.

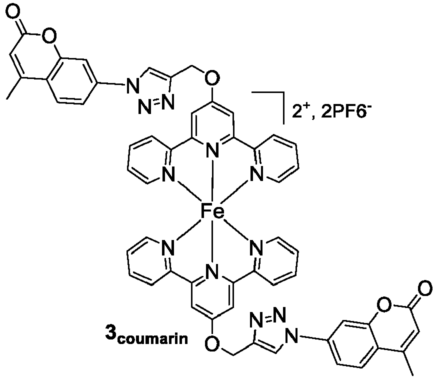

**3_{coumarin}**: **1H NMR** (400 MHz, d6-acetone) δ 9.16 (s, 2H), 9.06 (s, 4H), 8.81 (d, 4H), 8.07 (m, 8H), 7.96 (s, 2H), 7.55 (d, 4H), 7.27 (m, 4H), 6.45 (s, 2H), 6.03 s, 4H). **HRMS** (ESI-TOF) m/z [M]²⁺ Calcd for C₃₆H₂₆FeN₆O₂ m/z 315.0728; Found: 315.0746.

### General protocols for the synthesis of 'switch' ligand

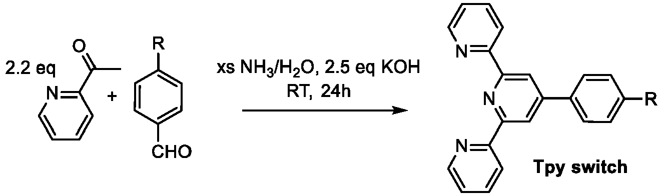

**General protocol for the synthesis of Tpy switch:** In a round bottom flask, the benzaldehyde derivative (1 equiv, 1.9 mmol) is added with 2-acetylpyridine (2.2 equiv, 4.2 mmol) in 25 mL of ethanol. Then, KOH (2.5 equiv, 4.75 mmol) is slowly added at room temperature and followed by 20 mL of ammoniac. The mixture is allowed to react at room temperature under vigorous agitation for 24h until a heavy precipitate forms. The precipitate is concentrated by half under vacuum, filtrated and washed by a minimum of cold ethanol. The precipitate is then recrystallized in a CHCl₃-Et₂O mixture affording the desired product as yellow needles.

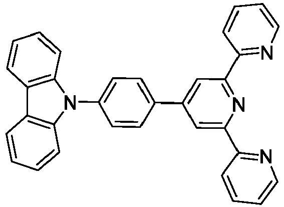

**1H NMR** (400 MHz, CDCl₃) δ 7.33 (t, 2H, Har), 7.38 (d, 2H, Har), 7.44-7.52 (m, 4H,Har), 7.73 (d, 2H, Har), 7.91 (t, 2H, Har), 8.16 (m, 4H, Har), 8.71 (d, 2H, Har), 8.76 (d, 2H, Har), 8.66 (s, 2H, Har); ¹³C NMR (CDCl₃, 400 MHz, 25°C): δ 110.0, 119.0, 120.4, 120.5, 120.6, 121.6, 123.8, 124.1, 126.3, 127.6, 129.1, 137.1, 137.7, 138.7, 140.9, 149.4, 149.5, 156.3; **HRMS** (ESI-TOF) m/z [M+H]⁺ Calcd for C₃₃H₂₃N₄ m/z 474.1800; Found: 475.1917.

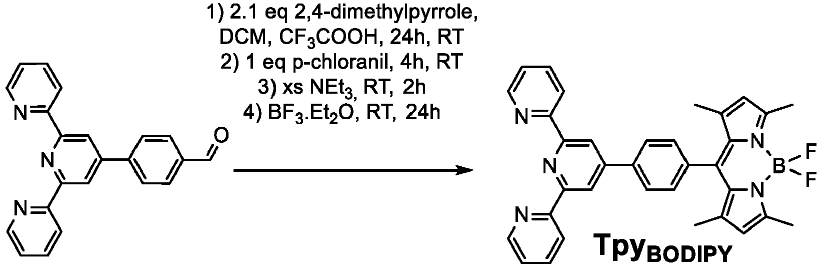

**Synthesis of Tpy_{BODIPY}:** In a Schlenk was added the 4-([2,2':6',2"-terpyridin]-4'-yl)benzaldehyde (1 equiv, 200 mg, 0.59 mmol), then three Argon-vacuum were made prior adding 381 mg of 2,4-dimethylpyrrole, 300 mL of dry DCM and 31 µL of TFA and stirred for 24h at room temperature. P-chloranil (1 equiv, 145 mg, 0.59 mmol) was added to the mixture and further stirred at room temperature over 4h. 3.8 mL of freshly distilled triethylamine were dropped to the mixture which was further stirred at room temperature for another 2h. Finally, 3.1 mL of BF₃.Et₂O was dropped to the mixture and allowed to react for 24h. The mixture was washed by water, brine and dried by vacuum. Finally, the product was purified by chromatography over basic alumina with CHCl₃-cyclohexane to afford the desired product as an orange powder. **1H NMR** (400 MHz, CDCl₃) δ 8.79 (s, 2H), 8.74 (d, J = 4.1 Hz, 2H), 8.69 (d, J = 7.6 Hz, 2H), 8.00 (d, J = 8.02 Hz, 2H), 7.89 (dt, J = 7.8 Hz and 1.6 Hz, 2H), 7.44 (d, J = 8.2 Hz, 2H), 7.36 (m, 2H), 6.01 (s, 2H), 2.56 (s, 6H), 1.45 (s, 6H).

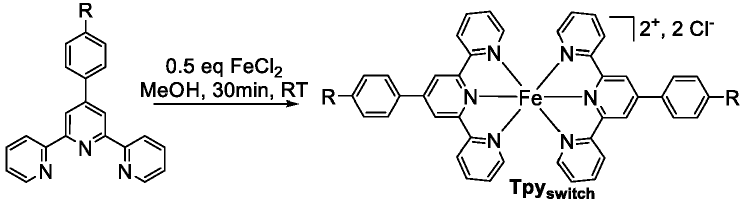

**General protocol for the synthesis of Tpy_{switch}:** In a Schlenk were added both the ligand (1 equiv) and FeCl₂ precursor (0.5 equiv, 20 mg, 0.16 mmol), then three Argon-vacuum were made and 2 mL of dry methanol were added under vigorous stirring. The reaction mixture turning purple was allowed to proceed at room temperature over 30 min, then filtrated over a pad of celite, concentrated and precipitated by addition of Et₂O. The precipitate was collected by filtration, washed by Et₂O and dried under vacuum to afford the desired complex as a fine purple powder.

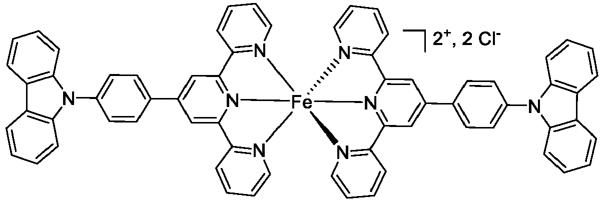

**1H NMR** (400 MHz, MeOD) δ 7.23 (m, 4H), 7.37 (m, 8H), 7.50 (m, 4H), 7.60 (m, 4H), 8.73 (d, 4H), 8.92 (d, 4H), 9.60 (s, 4H) ; ¹³C NMR (CDCl₃, 400 MHz, 25°C): δ 110.7, 118.8, 121.6, 121.7, 122.7, 125.2, 125.4, 127.4, 128.8, 128.9, 129.0, 130.9, 131.0, 136.8, 140.2, 141.8, 159.7, 162.0 ; **HRMS** (ESI-TOF) m/z [M]²⁺ Calcd for C₆₆H₄₄N₈ m/z 502.1514; Found: 502.1486.

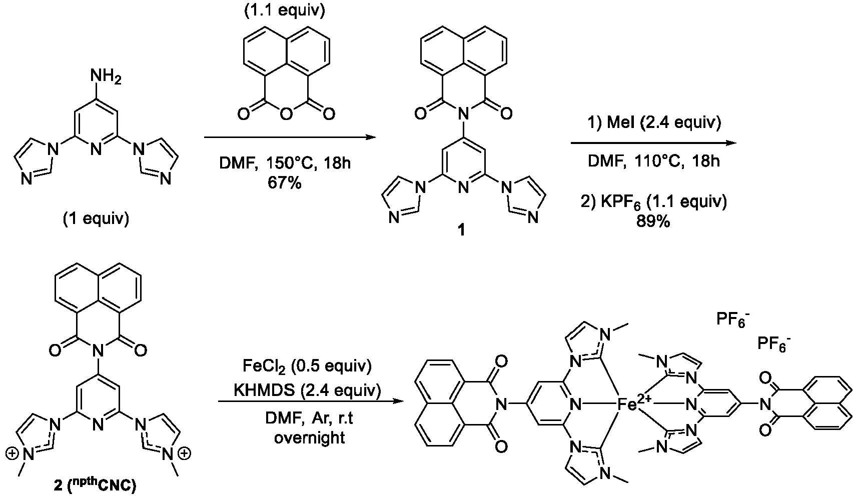

**Synthesis of 1**: In a round flask charged with 2,6-di(1H-imidazol-1-yl)pyridin-4-amine (400 mg, 1.77 mmol) and 1H,3H-benzo[de]isochromene-1,3-dione (386 mg, 1.94 mmol), 6 mL of DMF was added and the reaction was heated at 150°C for 18h (overnight). After this time a precipitate insoluble (white off) was formed. To the mixture, EtOAc was added (15 mL) and the mixture was filtered through a glass funnel (#4) and washed with EtOAc (15mL) and Et₂O (3×10 mL), obtaining 0.47 g (67%) white powder 1. 1H NMR (400 MHz, DMSO-d6) δ 8.77 (s, 1H), 8.64 (s, 1H), 8.62 (s, 1H), 8.10 (t, J = 1.5 Hz, 1H), 8.03 (s, 1H), 7.99 (t, J = 7.8 Hz, 1H), 7.21 (t, J = 1.3 Hz, 1H).

**Synthesis of 2** (**^{npth}CNC**): In a round flask with **1** (471 mg), 2 mL of DMF was added followed by the addition of MeI (2.4 equiv, 0.18 mL). The reaction was heated at 110°C overnight (18h) and covered with aluminum foil from light. After this time, the reaction was quenched by the addition of H₂O (10-14 mL) and KPF₆ (1.1 equiv, 235 mg). The mixture was stirred for 5 min and the solid was filtered through a glass funnel (#3) and washed with Et₂O (40 mL), recovering 0.75 g (89%) a with-off solid **2**. **1H-NMR** (400 MHz, ACN-d3) δ 9.51 (s, 1H), 8.65 (d, J = 7.3 Hz, 1H), 8.50 (d, J = 8.3 Hz, 1H), 8.15 (s, 1H), 8.07 (s, 1H), 7.92 (t, J = 7.8 Hz, 1H), 7.63 (s, 1H), 4.02 (s, 3H). **13C-NMR** (100 MHz, ACN-d3) δ 163.95, 152.25, 146.99, 136.17, 136.14, 132.59, 132.27, 128.92, 128.06, 125.90, 122.54, 120.10, 116.62, 37.39. **HRMS** (ESI-TOF) m/z [M]²⁺ Calcd for C₂₅H₁₉N₆O₂ m/z = 435.1572; Found: 435.1569.

**Synthesis of [Fe(^{npth}CNC)₂]²⁺:** In a schlenk with ligand **^{npth}CNC** (1 equiv, 50 mg) and FeCl₂ (0.5 equiv, 4.36 mg) three Argon-vacuum were made, then 2 mL of DMF was added and stirred by 5 min at r.t., after this time KHMDS (2.4 equiv, 33 mg) was added. The reaction was stirred at room temperature overnight (dark red color). The next day a saturated solution of KPF₆ in water (10 mL) was added and filtered through a sintered glass funnel #4 and washed with Et₂O (abundant, until it was a fine powder > 50 mL). To remove the unreacted ligand the mixture was added into a round flask in ACN (around 5 mL) and KHMDS was added (around 15 mg) the mixture was stirred for 5 min, then H₂O (10 mL) was added and the mixture was extracted with CH₂Cl₂ (3×10mL). The organic fractions were mixed and dried over MgSO₄, the solvent was removed under a vacuum. An alumina column was wade with eluent Et₂O:ACN starting with mixture 10:1 -> 3:1 -> 1:1 -> ACN, the fractions with the complex were collected and evaporated affording 20 mg (12%) of a reddish solid **[Fe(^{npth}CNC)₂]²⁺. 1H NMR** (400 MHz, ACN-d3) δ 8.69 (dd, J = 7.3, 1.1 Hz, 1H), 8.52 (dd, J = 8.4, 1.1 Hz, 1H), 7.97 - 7.92 (m, 2H), 7.87 (s, 1H), 7.06 (d, J = 2.2 Hz, 1H), 2.73 (s, 3H). **13C NMR** (100 MHz, ACN-d3) δ 200.64, 164.30, 155.11, 146.60, 135.96, 132.68, 132.14, 128.05, 127.37, 122.94, 117.28, 107.34, 35.12. **HRMS** (ESI-TOF) m/z [M]²⁺ Calcd for C₅₀H₃₆N₁₂O₄ m/z = 43.1161; Found: 434.1175.

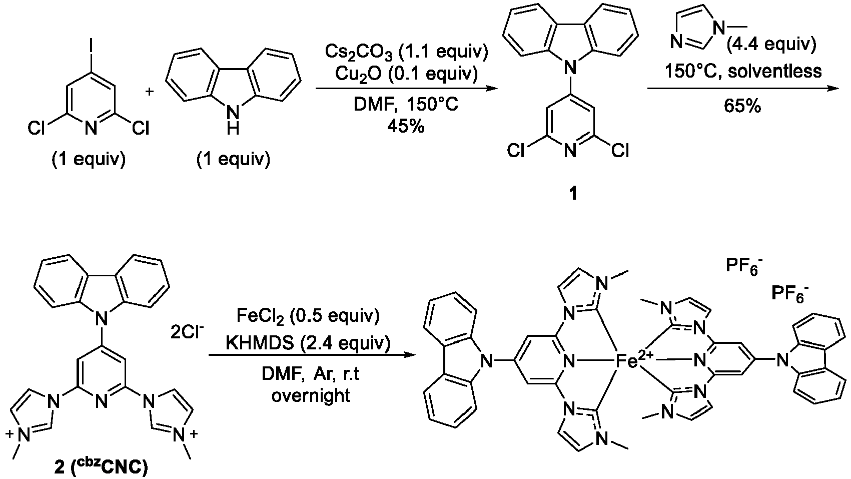

**Synthesis of 1**: In a round flask 2,6-dichloro-4-iodopyridine (1 equiv, 0.5 g), carbazole (1.1 equiv, 0.66 g), Cs₂CO₃ (1 equiv, 0.31 g) and Cu₂O (0.1 equiv, 26 mg) were mixed in 10 mL of DMF, then the reaction was heated at 150°C overnight. The reaction was followed by TLC until the pyridine was consumed. The reaction was filtered through celite washing with CH₂Cl₂. The mixture was purified by silica collumn with a mixture Hex:EtOAc (40:1) + 1% Et₃N. Obtaining a white solid in 0.51 g (45%). **1H NMR** (400 MHz, CDCl₃) δ 8.12 (d, J = 7.7 Hz, 1H), 7.58 (d, J = 6.3 Hz, 2H), 7.49 (ddd, J = 8.6, 7.1, 1.1 Hz, 1H), 7.38 (ddd, J = 7.9, 7.0, 0.7 Hz, 1H). **13C NMR** (100 MHz, CDCl₃) δ 152.27, 149.62, 139.04, 126.96, 124.81, 122.20, 120.91, 119.23, 109.94. **HRMS** (ESI-TOF) m/z [M+H]⁺ Calcd for C₁₇H₁₀Cl₂N₂ m/z = 313.0324; Found: 313.0299.

**Synthesis of** 2 **(^{cbz}CNC):** In a round flask with 1 (1 equiv, 0.42 g) and N-methylimidazole (4.4 equiv, 0.47 mL) 0.5 mL of DMF was added. The reaction was stirred for 72h at 150 °C until a white-off solid appeared. The reaction was filtered washing with acetone. The isolated powder was dried under vacuum affording the desired compound **^{cbz}CNC** in 0.42 g (65%) yield. **1H NMR** (400 MHz, MeOD₄) δ 8.67 (s, 1H), 8.44 (s, 1H), 8.18 (d, J = 7.7 Hz, 1H), 7.92 (s, 1H), 7.87 (d, J = 8.8 Hz, 1H), 7.54 (t, J = 7.2 Hz, 1H), 7.42 (t, J = 7.7 Hz, 1H), 4.16 (s, 3H). **13C NMR** (100 MHz, MeOD₄) δ 153.65, 148.73, 140.08, 128.24, 126.16, 126.09, 123.70, 121.65, 120.91, 111.71, 111.40, 37.36. **HRMS** (ESI-TOF) m/z [M]²⁻ Calcd for C₂₅H₂₂N₆ m/z = 405.1833; Found: 405.1828.

**Synthesis of [Fe(^{cbz}CNC)₂]²⁺:** In a Schlenk with the ligand **^{cbz}CNC** (1 equiv, 50 mg) and FeCl₂ (0.5 equiv, 6.6 mg) three Argon-vacuum were made, then 2 mL of DMF was added and stirred by 5 min, after this time KHMDS (2.4 equiv, 50.3 mg) was added. The reaction was stirred at room temperature overnight. The next day a red-homogeneous mixture was quenched by the addition of KPF₆ in water (around 10 mL). The solid was filtered through a funnel #4 and washed with diethyl ether (3 × 15 mL). The solid was recovered with ACN and a neutral alumina column was made, starting with the mixture diethyl ether:ACN 3:1 to only ACN, the collected fractions afforded 27.4 mg (33%) red solid. **1H NMR** (400 MHz, ACN-d3) δ 8.33 - 8.26 (m, 1H), 8.14 (s, 1H), 8.12 (d, J = 2.2 Hz, 1H), 7.94 (d, J = 8.3 Hz, 1H), 7.61 (ddd, J = 8.4, 7.2, 1.3 Hz, 1H), 7.50 - 7.45 (m, 1H), 7.09 (d, J = 2.1 Hz, 1H), 2.78 (s, 3H). **13C NMR** (100 MHz, ACN-d3) δ 201.50, 125.36, 122.98, 121.68, 117.85, 111.92, 103.86, 35.87. **HRMS** (ESI-TOF) m/z [M]²⁺ Calcd for C₅₀H₄₀N₁₂Fe m/z = 433.1419; Found: 434.1443.

### General protocol for the synthesis of bichromophoric complex

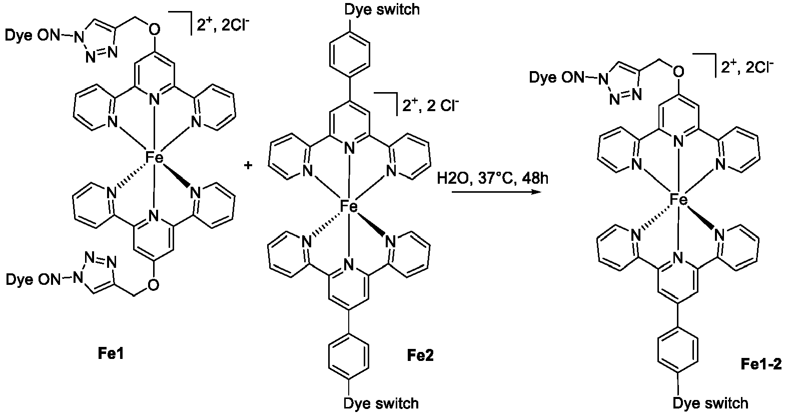

**General protocol for the synthesis of Fe1-2:** In an Eppendorf tube, were added both complexes **Fe1** (1 equiv, 10 mg, 9.0 ×10⁻⁶ mol) and **Fe2** (1 equiv, 9.7 mg, 9.0 ×10⁻⁶ mol) in 1 mL of deionized water. The mixture was incubated at 37°C for 2 days under stirring and purified by preparative HPLC (gradient H₂O-MeOH with 0.02% TFA) to afford the desired complex **Fe1-2** as a purple powder.

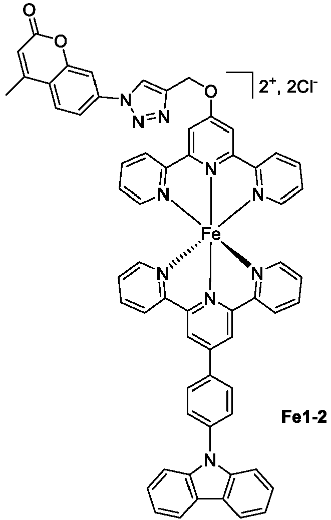

**1H-NMR** (400 MHz, MeOD) δ 9.55 (s, 2H), 9.13 (s, 1H), 8.97 (s, 2H), 8.86 (d, J = 7.6 Hz, 2H), 8.70 (t, J = 8.7 Hz, 4H), 8.23 (d, J = 7.8 Hz, 2H), 7.96-8.07 (m, 8H), 7.60 (d, J = 8.4 Hz, 2H), 7.51 (t, J = 7.6 Hz, 2H), 7.32-7.39 (m, 6H), 7.18-7.25 (m, 4H), 6.48 (d, J = 1.1 Hz, 1H), 6.02 (s, 2H), 2,57 (d, J=2.2 Hz, 3H). **HRMS** (ESI-TOF) m/z [M]²⁺ Calcd for C₆₁H₄₂N₁₀O₃ m/z 509.1390; Found: 509.1438.

### Example 2: Fluorescence behavior of the compounds of the invention

A compound of the invention, Fe1-2 as described in example 1, has been studied regarding its fluorescence behavior.

The fluorescence spectra were recorded on a SAFAS-Xenius spectrometer (Monaco) and corrected for instrument response. Solutions of Fe1-2 were prepared freshly in ethanol at a concentration corresponding to an absorbance of 0.1 OD and analyzed at 20°C in a quartz cuvette with an optical pathlength of 10mm.

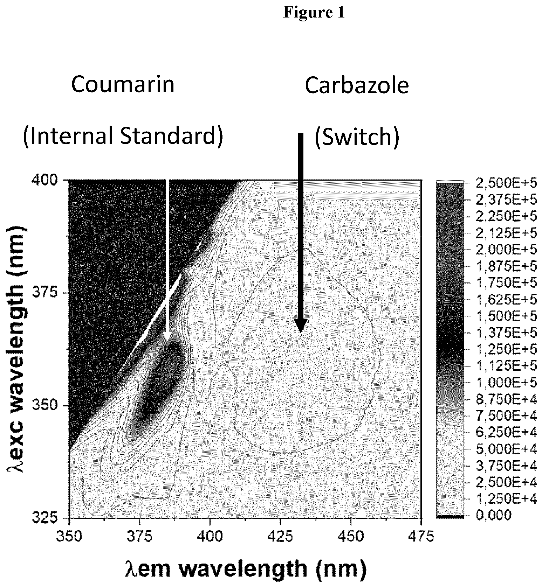

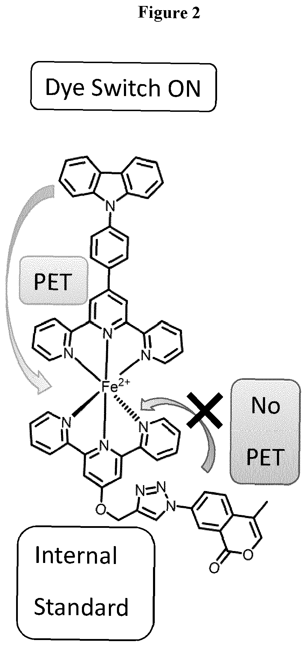

As shown in figure 1, and represented in figure 2, D₁ is quenched (typically more than 95% quenched) while D₂ acts as an internal standard, when the MBA is untransformed. Without wishing to be bound by theory, it is believed that D₁ is quenched by PET (Photoinduced Energy Transfer).

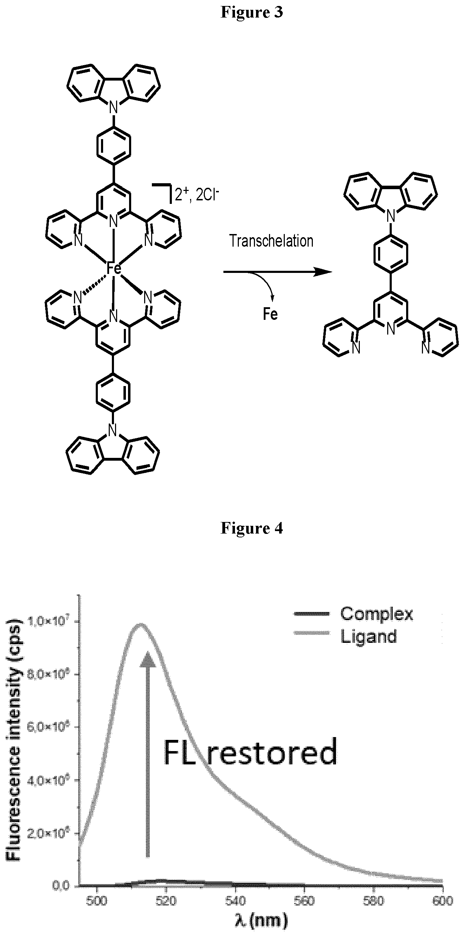

When the MBA undergoes degradation, for example transchelation, fluorescence of D₁ is restored, as shown with another compound (figures 3 and 4).

## Claims

1. A compound of the following formula (I):
D₁-E₁-(MBA)-E₂-D₂ (I),
wherein :
MBA is a metallo-biomedical agent, notably a metallo-pharmaceutical or a metallo-contrast agent, in which the metal is a metal M chosen from Co, Fe, Ni, Cu, Pt, Pd, Ru, Ir, Cr, and Mn;
said metallo-biomedical agent MBA comprising at least one coordination moiety Z₁ constituted by or comprising at least one A₁ coordinating atom, Z₁ being chosen from:
• -O⁻, -OH, or -ORₐ,
• -S⁻, -SH, or -SRₐ,
• -S(O)Rₐ, -S(O)₂Rₐ, or -SO₃,
• -Se⁻, -SeH, or -SeRₐ,
• -COO⁻, -COOH, or -COORₐ,
• -PRₐR_{b} or -P(O)RₐR_{b},
• -NH₂, -NHRₐ or -NRₐR_{b},
• carbenyls, in particular N-heterocyclic carbenyls,
• heteroaryls, in particular azaheteroaryls, more particularly aromatic amine groups, for example pyridinyl or quinoleinyl, and
• aryls, in particular phenyl, and heteroaryls, in particular azaheteroaryls, more particularly aromatic amine groups, for example pyridinyl or quinoleinyl, being substituted by at least one group R chosen independently from:
∘ -O⁻, -OH, or -ORₐ,
∘ -S⁻, -SH, or -SRₐ,
∘ -S(O)Rₐ, -S(O)₂Rₐ, or -SO₃,
∘ -Se⁻, -SeH, or -SeRₐ,
∘ -COO⁻, -COOH, or -COORₐ,
∘ -PRₐR_{b} or -P(O)RₐR_{b},
∘ -NH₂, -NHRₐ or -NRₐR_{b},
Rₐ, R_{b} being independtly chosen from and C₁-C₆-alkyl groups, aryls, in particular phenyl, and heteroaryls, in particular azaheteroaryls, more particularly aromatic amine groups, for example pyridinyl or quinoleinyl;
E₁ being bound to MBA by being covalently bound to Z₁,
E₂ being bound through the atom or group X when it exists or through Eₐ otherwise to MBA by being covalently bound to one of the coordination moieties of MBA;
D₁ and D₂ are organic fluorophores, D₁ being different from D₂;
E₁ is a linker of following formula (IIa):
-(A)ₓ-(B)_{y}-(C)_{z}- (IIa),
in which :
x, y and z are independtly 0 or 1, with x + y + z > 0,
A, B and C are independtly chosen from -C(R')=C(R")-, -C=C-, arene diyl groups, in particular benzene diyl, and heteroarene diyl groups, in particular triazole diyl or tetrazine diyl, with R' and R" being independently chosen from H and C₁-C₃-alkyl groups;
or E₁ is absent;
E₂ is a linker of following formula (IIb):
-(X)₁-Eₐ-(Y)_{J}-(E_{b})ₖ- (IIb),
in which :
i, j and k are independtly 0 or 1,
X is O or NR_{c}, with R_{c} being chosen from Hand C₁-C₃-alkyl groups,
Eₐ and E_{b} are independently chosen from C₁-C₁₂-alkane diyl groups, said groups being optionnaly interupted by one or more -O- and/or -NH- residues;
Y is chosen from O or NR_{c}, with R_{c} being chosen from Hand C₁-C₃-alkyl groups, - NHCO-, -CONH-, -C(=O)-, -COO-, OC(=O), -C(R')=C(R")-, with R' and R" being independently chosen from H and C₁-C₃-alkyl groups, -C=C-, maleimide diyl, arene diyl groups, in particular benzene diyl, and heteroarene diyl groups, in particular aza-heteroarene diyl groups, more particularly triazole diyl or tetrazine diyl.

2. The compound according to claim 1, wherein MBA comprises, further to Z₁, n additional coordination moieties Z', with n being chosen from 1, 2, 3, 4 or 5.

3. The compound according to claim 2, wherein the additional coordination moieties Z' constituted by or comprising at least one A' coordinating atom, Z' being chosen from:
• -O⁻, -OH, or -ORₐ,
• -S⁻, -SH, or -SRₐ,
• -S(O)Rₐ, -S(O)₂Rₐ, or -SO₃,
• -Se⁻, -SeH, or -SeRₐ,
• -COO⁻, -COOH, or -COORₐ,
• -PRₐR_{b} or -P(O)RₐR_{b},
• -NH₂, -NHRₐ or -NRₐR_{b},
• carbens, in particular N-heterocyclic carbens,
• heteroaryls, in particular azaheteroaryls, more particularly aromatic amine groups, for example pyridinyl or quinoleinyl, and
• aryls, in particular phenyl, and heteroaryls, in particular azaheteroaryls, more particularly aromatic amine groups, for example pyridinyl or quinoleinyl, being substituted by at least one group R chosen independently from:
∘ -O⁻, -OH, or -ORₐ,
∘ -S⁻, -SH, or -SRₐ,
∘ -S(O)Rₐ, -S(O)₂Rₐ, or -SO₃,
∘ -Se⁻, -SeH, or -SeRₐ,
∘ -COO⁻, -COOH, or -COORₐ,
∘ -PRₐR_{b} or -P(O)RₐR_{b},
∘ -NH₂, -NHRₐ or -NRₐR_{b},
Rₐ, R_{b} being independtly chosen from and C₁-C₆-alkyl groups, aryls, in particular phenyl, and heteroaryls, in particular azaheteroaryls, more particularly aromatic amine groups, for example pyridinyl or quinoleinyl.

4. The compound according to anyone of the preceding claims, wherein Z₁ is chosen from:
• pyridinyl, and
• W-aryl groups, in particular W-phenyl group, wherein W is OH, SH, NH₂ or PR_{d}, with R_{d} being phenyl.

5. The compound according to anyone of the preceding claims, wherein MBA is chosen from:
• terpyridine, bis-terpyridine and their derivatives;
• bis(carbene)pyridine, bis-bis(carbene)pyridine and their derivatives; and
• bis(phosphine)pyridine and their derivatives.

6. The compound according to anyone of the preceding claims, wherein D₁ and D₂ are independently chosen from coumarine, carbazole, thieno[3,2-b]thiophene, triphenylamine, F₃C-benzene, trifluoromethyl-benzene, anthracene, benzo[de]isoquinoline-1,3(1H,3H)-dione, BODIPY, rhodamines, cyanine3 amine, cyanine5 amine, cyanine7 amine compounds, and their derivatives.

7. The compound according to anyone of the preceding claims, wherein M is Co, Fe, Ni, Cu, Pt, or Pd, in particular Fe.

8. The compound according to anyone of the preceding claims, wherein E₁ is a benzene diyl, in particular para-benzene diyl, or a thiophene diyl, in particular a 2,5- thiophene diyl.

9. The compound according to anyone of the preceding claims, wherein E₂ is such as:
-(X)ᵢ-Eₐ-(Y)ⱼ-(E_{b})ₖ- (IIb),
• i, j and k are 1,
• XisO,
• Eₐ is a C₁-C₁₂-alkane diyl group, in particular a C₁-C₃-alkane diyl group,
• E_{b} is a C₁-C₁₂-alkane diyl group, in particular a C₂-C₁₂-alkane diyl group, and/or
• Y is an arene diyl, in particular benzene diyl, or an heteroarene diyl, in particular a triazole diyl group.

10. Use of a compound according to claim 1, for the *in vitro, ex situ* or *ex vivo* study of the metallo-biomedical agent MBA, notably a metallo-pharmaceutical or a metallo-contrast agent.

11. Method of in vitro, ex situ or ex vivo study of a metallo-biomedical agent MBA, notably a metallo-pharmaceutical or a metallo-contrast agent, comprising a step of fluorescence measurement related to a compound according to claim 1.

12. A compound according to claim 1, for its use in the in vivo study of the metallo-biomedical agent MBA, notably a metallo-pharmaceutical or a metallo-contrast agent.
